# EUROPEAN PATENT APPLICATION

(11) **EP 4 390 689 A1**
(43) Date of publication of application: **26.06.2024**
(21) Application number: 22216256.2
(22) Date of filing: 22.12.2022
(51) Int. Cl.: G06F 9/54, G06V 10/00

(54) **MACHINE LEARNING FRAMEWORK FOR GENERIC OBJECT DETECTION**

(30) Priority: 21.12.2022 PT 2022118422
(71) Applicant: NOS Inovação, S.A., 4460-191 Senhora da Hora (PT)
(72) Inventor: PINTO SEQUEIRA DOS SANTOS GRAÇA, Jorge Filipe, 4460-191 Senhora da Hora (PT); NUNES FERREIRA, João Miguel, 4460-191 Senhora da Hora (PT); FERREIRA MARTINS, Carlos Manuel, 4460-191 Senhora da Hora (PT); DAVID RECHENA, Pedro Miguel, 4460-191 Senhora da Hora (PT); PIMENTEL FERNANDES MAIO, Carolina, 4460-191 Senhora da Hora (PT); PRETO XAVIER, Tiago Francisco, 4460-191 Senhora da Hora (PT); SOARES CAPITÃO, Pedro Miguel, 4460-191 Senhora da Hora (PT); RODRIGUES FERREIRA MELO, Orlando Duarte, 4460-191 Senhora da Hora (PT); SOUSA ROSA DA CRUZ FERNANDES, Bruno de, 4460-191 Senhora da Hora (PT)
(74) Representative: do Nascimento Gomes, Rui

(57) **Abstract**

The present application describes a machine learning framework (1) for generic object detection, comprising processing means adapted to implement a framework front-end service (1.1) configured to provide and implement a user interface (4), and a framework back-end service (2.1) configured to provide an interface to a cloud computing platform (2) containing a machine learning module (2.2). The framework front-end service (1.1) being configured to receive an image data containing at least one embedded detectable object and the machine learning module (2.2) being adapted to detect at least one object embedded in the received image data. The developed solution offers a simple, no code, intuitive and fully Web environment for the development of object detection machine learning models.

## Description

### FIELD OF THE APPLICATION

The present application generally relates to machine learning frameworks for generic object detection.

### PRIOR ART

Detection of objects is a challenging issue in computer vision and has been actively researched for its extensive applications.

The development of machine learning models used for this purpose are based on complex and not very intuitive development environments, which are only available to experts with a very accurate knowledge profile. In addition, they always require the installation of specific software.

An example of an existing solution is Microsoft's lobe.ai, which provides a simplified user experience, but requires the installation of specific software to develop the model, making the process of deploying models on the Web more complex. Furthermore, it has the limitation of providing solutions for image templates. Video, audio, text and tabular data are not supported.

The present solution intended to innovatively overcome such issues.

### SUMMARY OF THE APPLICATION

It is therefore an object of the present application a machine learning framework for generic object detection. The developed solution offers a simple, no code, intuitive and fully Web environment for the development of Machine Learning models. It establishes an interface with a cloud computing machine learning module, also using it to create datasets and train models, without the need to install any software. It also serves as a platform to consume and implement new solutions through pre-trained models without the need for prior knowledge in machine learning.

### DESCRIPTION OF FIGURES

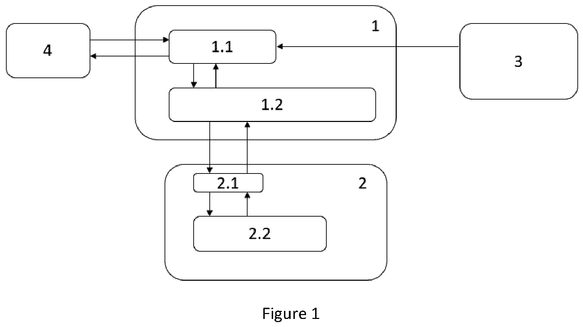

Figure 1- representation of an embodiment of the machine learning framework object of the present application, wherein the reference signs represent:
   1 - machine learning framework;
   1.1 - machine learning framework's front-end;
   1.2 - machine learning framework's back-end;
   2 - cloud computing platform;
   2.1 - machine learning module's application programming interface (API);
   2.2 - machine learning module;
   3 - user's custom container;
   4 - user's computer device.

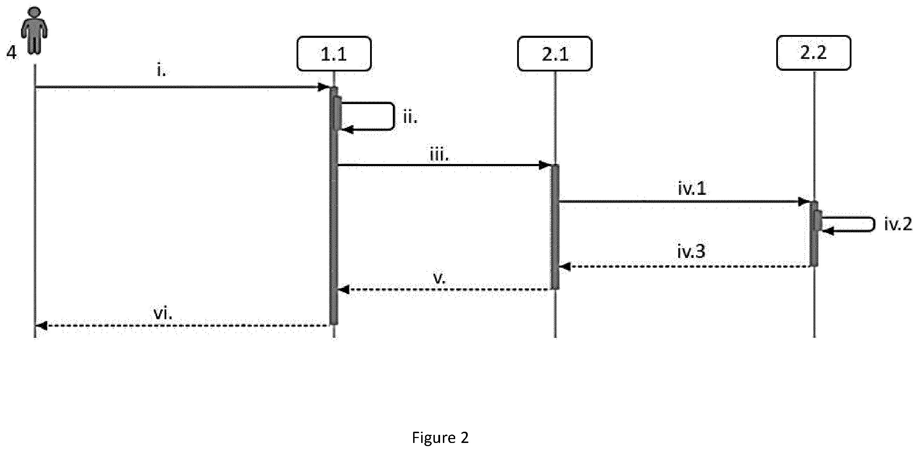

Figure 2 - representation of an embodiment of the method for generic object detection, using the machine learning framework object of the present application, wherein the reference signs represent:
   i. - receiving an image data containing at least one embedded detectable object, by a front-end service's machine learning framework;
   1.1 - machine learning framework's front-end;
   ii. processing the image data by the front-end service in order to generated a request to a cloud computing platform's machine learning module;
   iii. transmitting said request to a machine learning module's API by a back-end service's machine learning framework;
   2.1 - machine learning module's API;
   iv. receiving the request containing the image data,
   2.2 - machine learning module;
   iv.2 detecting the least one detectable object embedded in said image data by the machine learning module;
   iv.3 - transmitting an object detection output to the machine learning module's API;
   4 - user's computer device.

### DETAILED DESCRIPTION

The more general and advantageous configurations of the present invention are described in the Summary of the application. Such configurations are detailed below in accordance with other advantageous and/or preferred embodiments of implementation of the object of the present application.

It is described a Machine learning framework (1) for generic object detection. It represents a no-code / low-code machine learning platform (1) so that various types of user profiles that not only data scientists or data engineers are able to easily implement automated and quick custom solutions to artificial intelligence / machine learning related problems.

The implemented architecture, therefore is able to integrate several artificial intelligence (Al) APIs in order to allow the user to:
- Upload a dataset, creating a storage of reusable datasets for other research or commercial purposes;
- Train pre-existing models for the considered use-case; and
- Obtain results for inference from the trained model.

The framework (1) developed comprises a memory containing a framework services module and a processor coupled to the memory. Said processor is programmed to Implement a plurality of framework services using the framework services module, including a framework front-end service (1.1) and a framework back-end service (1.2).

The framework front-end service (1.1) is configured to provide and implement a user interface, and a framework back-end service (1.2) is configured to provide an interface to a cloud computing platform (2) containing a machine learning module (2.2). More particularly, the framework front-end service (1.1) is configured to receive an image data containing at least one embedded detectable object, and the machine learning module (2.2) is adapted to detect at least one object embedded in the received image data.

In one embodiment, the cloud computing platform (2) is the Google cloud platform and machine learning module (2.2) is Vertex Al.

In another embodiment, the framework services module implements a framework interface service adapted to provide an interface to cloud computing platform's frameworks. The cloud computing platform's frameworks may be at least the following:
- cloud-computing engine processors Layer, including virtual machine GPUs and CPUs; and
- data storage layers, including BigQuery and Google Cloud Storage.

The proposed machine learning framework (1) does not require the installation of any software and the user can deploy his model with one click. From there, the model is available for ready-made models and solutions (from Google or developed by the Dev team) for all users.

It thus allows any type of profile to easily and scalably use models for solutions/use-cases different from those available. This is only possible thanks to the implementation of a flexible and modular architecture solution that provides not only the implementation, use and sharing of customized models (3), but also the use of external models for more comprehensive solutions. It also allows the creation, management and reuse of datasets for purposes other than those for which they were acquired.

In another embodiment, the framework back-end service (1.2) is programmed to provide interface to a plurality of cloud-computing platform modules. Additionally, the framework back-end service (1.2) comprises cloud computing platform's library data, such as Python, Java or Node.js, for integrating with cloud computing platform's APIs. The framework back-end service (1.2) may also comprise cloud computing library data for integrating with the cloud computing machine learning module (2.2) through a machine learning module's API (2.1).

In another embodiment, the framework front-end service (1.1) is programmed to provide an interface to a user (4) for creating and managing datasets, endpoints, models and predictions. More particularly, the framework front-end service (1.1) is programmed to implement a machine learning deployment hub. The machine learning deployment hub may be configured to implement a Kubernetes engine to automatically deploy containerized machine learning training models.

In another embodiment, the framework front-end service (1.1) is further programmed to provide an interface to a user (4) for uploading machine learning training applications and for deploying already trained models and custom code (3). More particularly, the framework front-end service (1.1) is programmed to implement a machine learning training hub. Said training hub is configured to structure training databases to manage user-accessible training datasets via the user interface and to manage at least the following types of data:
- tubular data, including Classifiers, regression, clustering and time series;
- non-structured data, including image classification, object detection, video classification, text to speech e speech to text, and
- image processing data.

It is also an object of the present application, a computer implemented method for generic object detection using the machine learning framework (1) already described.

In a preferred aspect of said method, it comprises the following steps:
i. receiving an image data containing at least one embedded detectable object, by a front-end service's machine learning framework (1.1);
ii. processing the image data by the front-end service (1.1) in order to generated a request to a cloud computing platform's machine learning module (2.2);
iii. transmitting said request to a machine learning module's API (2.1) by a back-end service's machine learning framework (1.2);
iv. receiving the request containing the image data, detecting the least one detectable object embedded in said image data by the machine learning module (2.2), and transmitting an object detection output to the machine learning module's API (2.1);
v. transmitting the object detection output by the machine learning module's API (2.1) to the back-end service's machine learning framework (1.2); and
vi. providing the object detection output in a user interface by the front-end service's machine learning framework (1.1).

In one embodiment of the method, the image data is comprised by one frame, being a static image content. Alternatively, the media data comprises a plurality of frames, being a video content, said video content being a live video streaming broadcast or a non-live video streaming.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A Machine learning framework for generic object detection comprising:
- A memory containing a framework services module; and
- A processor coupled to the memory and programmed to:
Implement a plurality of framework services using the framework services module, including a framework front-end service configured to provide and implement a user interface, and a framework back-end service configured to provide an interface to a cloud computing platform containing a machine learning module;
wherein,
the framework front-end service is configured to receive an image data containing at least one embedded detectable object; and
the machine learning module is adapted to detect at least one object embedded in the received image data.

2. The framework according to claim 1, wherein the framework back-end service is programmed to provide interface to a plurality of cloud-computing platform modules; the framework back-end service comprising cloud computing platform's library data for integrating with cloud computing platform's Application Programming Interfaces (APIs).

3. The framework according to claim 2, wherein the framework back-end service comprises cloud computing library data for integrating with the cloud computing machine learning module through a machine learning module's API.

4. The framework according to any of the previous claims, wherein the framework front-end service is programmed to provide an interface to a user for creating and managing datasets, endpoints, models and predictions.

5. The framework according to claim 4, wherein the framework front-end service is programmed to implement a machine learning deployment hub; the machine learning deployment hub is configured to implement a Kubernetes engine to automatically deploy containerized machine learning training models.

6. The framework according to any of the previous claims, wherein the framework front-end service is further programmed to provide an interface to a user for uploading machine learning training applications and for deploying already trained models and custom code.

7. The framework according to claim 6, wherein the framework front-end service is programmed to implement a machine learning training hub; said training hub configured to structure training databases to manage user-accessible training datasets via the user interface and to manage at least the following types of data: tubular, non-structured and image processing data.

8. The framework according to any of the previous claims, wherein the cloud computing platform is the Google cloud platform.

9. The framework according to any of the previous claims, wherein the framework services module implements a framework interface service adapted to provide an interface to cloud computing platform's frameworks.

10. The framework according to claim 8 and 9, wherein the cloud computing platform's frameworks are at least the following:
- cloud-computing engine processors Layer, including virtual machine GPUs and CPUs; and
- data storage layers, including BigQuery and Google Cloud Storage.

11. The framework according to any of the previous claims, wherein the machine learning module is Vertex Al.

12. A computer implemented method for generic object detection using the machine learning framework of claims 1 to 11; the method comprising the steps of:
i. receiving an image data containing at least one embedded detectable object, by a front-end service's machine learning framework;
ii. processing the image data by the front-end service in order to generated a request to a cloud computing platform's machine learning module;
iii. transmitting said request to a machine learning module's API by a back-end service's machine learning framework;
iv. receiving the request containing the image data, detecting the least one detectable object embedded in said image data by the machine learning module, and transmitting an object detection output to the machine learning module's API;
v. transmitting the object detection output by the machine learning module's API to the back-end service's machine learning framework;
vi. providing the object detection output in a user interface by the front-end service's machine learning framework.

13. The method according to claim 12, wherein the image data is comprised by one frame, being a static image content.

14. The method according to claim 12, wherein the media data comprises a plurality of frames, being a video content; wherein the video content is a live video streaming broadcast or the video content is a non-live video streaming.
